# EUROPÄISCHE PATENTSCHRIFT

(11) **EP 3 541 859 B1**
(45) Veröffentlichungstag und Bekanntmachung des Hinweises auf die Patenterteilung: **25.03.2026**
(21) Anmeldenummer: 17801679.6
(22) Anmeldetag: 16.11.2017
(51) Int. Cl.: C08G 18/40, C08J 11/24, C08G 101/00

(54) **RECYCLINGPOLYOL**
RECYCLED POLYOL
POLYOL DE RECYCLAGE

(30) Priorität: 18.11.2016 DE 102016122276
(43) Veröffentlichungstag der Anmeldung: 25.09.2019
(73) Patentinhaber: H&S Anlagentechnik GmbH, 27232 Sulingen (DE)
(72) Erfinder: STOYCHEV, Valentin, 15745 Wildau (DE); BOYADZHIEV, Marin, 14513 Teltow (DE)
(74) Vertreter: Eisenführ Speiser
(86) Internationale Anmeldenummer: PCT/EP2017/079418
(87) Internationale Veröffentlichungsnummer: WO 2018/091575

(56) Entgegenhaltungen:
- EP-A1- 0 682 063
- EP-A1- 0 718 349
- WO-A1-2006/080743
- US-A- 4 044 046

## Beschreibung

Die vorliegende Erfindung betrifft ein Polyol mit bestimmten Produkteigenschaften, die es als Recyclingpolyol aus einem neuen bestimmten Recyclingrozess zugänglich ausweisen.

Einige Millionen benutzter Matratzen werden in Deutschland jedes Jahr entsorgt. Diese Postconsumer-Matratzen enthalten je nach Zusammensetzung verwertbare Mengen an Polyurethanschaum(PUR), hochelastischem PUR-(HR)-Schaum, PUR-Viscoschaum, synthetisches oder natürliches Latex und Springstahlfedern. Hinzu kommen Fasern, Textilien und Holzelemente sowie nicht gewünschte Bestandteile wie z.B. Schimmel, Bakterien, Staubmilben, Hautschuppen und Viren. Vor dem Hintergrund der enormen Menge von zu entsorgenden gebrauchten Matratzen - allein in Deutschland fallen jährlich 20.000 t an - und den gesetzlichen Rücknahmepflichten von gebrauchten Matratzen ( z.B. in Frankreich und Belgien ) besteht die Notwendigkeit, die Matratzen in einem ökologischen und ökonomischen Verfahren wieder in den Rohstoffkreislauf zurückzuführen.

Ähnlich sieht die Situation bei anderen Polyurethanabfällen aus dem Post-Consumer-Bereich aus: Auch in Autositzen oder Möbeln wie z. B. Sitzgarnituren und in weiteren Gebrauchsgegenständen wie beispielsweise Kissen, Polster, Lehnen, PTC werden nennenswerte Mengen von Polyurethan-Materialien verarbeitet und nach Ende des Gebrauches vom Endverbraucher entsorgt. Auch diese Materialien sollten in einem möglichst ökologischen und ökonomischen Verfahren so weit wie möglich wieder in den Rohstoffkreislauf zurückgeführt werden.

Der vorliegenden Erfindung liegt die Aufgabe zugrunde, ein durch ein neues Verfahren zur Herstellung von isocyanatreaktiven Recycling-Polyolen hergestelltes typisches Polyol zur Verfügung zu stellen, das für die Herstellung insbesondere von Polyurethan-Hartschaumstoffen geeignet ist.

Es ist bekannt, Polyurethane (PUR) durch chemische Umwandlung in isocyanatreaktive, flüssige Produkte zu überführen.

Laut Stand der Technik werden neben der chemischen Umwandlung von Polyurethanen (PUR) mittels Wasser (Hydrolyse) auch Verfahren unter Verwendung von Aminen (Aminolyse), Säuren (Acidolyse) oder Alkoholen (Alkoholyse) vorgeschlagen, um Polyurethane (PUR) in Recyclatpolyole zu überführen.

Die Alkoholyse von PUR beruht auf einer Gleichgewichtsreaktion, bei welcher zur Spaltung der Urethangruppen überstöchiometrische Mengen an Hydroxylgruppen in Form von Diolen und/oder Triolen erforderlich sind.

Die Lösung von Polyurethanabfällen in Glykolen (Glykolyse) bei erhöhter Temperatur und die Fällung der Amine mit Chlorwasserstoff wird in US 4,035,314 A beschrieben.

Eine andere Variante, die Lösung von Polyurethanabfällen in Diole, Fällung der Amine durch halogenierte Ester der Phosphorsäure, Abtrennung der Aminsalze und Umsetzung mit Isocyanaten wird in US 4,044,046 A gelehrt.

Die Katalyse der Reaktion mit Glykolen wird in den DE 2 238 109 A, DE 2 557 172, DE 2 711 145 A und DE 2 834 431 beschrieben. Als wirksame Katalysatoren bei der Glykolyse wurden dabei die typischen Umesterungskatalysatoren, z. B. Aminoalkohole, Metallcarboxylate, -hydroxide- und alkoxide sowie Lewis- Säuren gefunden.

Die nach dem bekannten Alkoholyseverfahren hergestellten Polyole sind wegen des höheren Hydroxyläquivalents für die Herstellung von PUR-Hartschaumstoffen geeignet, aber die Polyurethan-Abfälle müssen nach chemischer Zusammensetzung sortiert werden.

Bei der Aminolyse von Polyurethanen läuft eine schnelle Reaktion bei vergleichsweise niedriger Temperatur ab. Als Ergebnis dieser Umsetzung entstehen zwei Phasen im Reaktionsgemisch - eine niedrigviskose Polyolphase und eine harte Oligoharnstoffphase. Die Polyolphase kann mit einem Di- und/oder Polyisocyanat direkt wieder zu einem dem ursprünglichen Polyurethan sehr ähnlichen Produkt umgesetzt werden. Werden z.B. bei der Spaltung ein Polyurethan- Kaltformweichschaumstoff und ein Dipropylentriamin eingesetzt, so kann durch einfache Umsetzung der erhaltenen Polyolphase mit Wasser und einem Polyarylpolyisocyanat wieder ein Kaltformweichschaumstoff hergestellt werden.

Die untere Phase, bestehend aus Oligoharnstoff (ca. 40 %), ist (ohne weitere Umsetzungsschritte) leider unbrauchbar.

Die DE 195 12 778 C1 schlägt nun die Herstellung von Weichschaum-Recyclatpolyolen durch Solvolyse von Polyurethanabfällen in einer Abbaureaktion mit cyclischen Dicarbonsäureanhydriden wie Bernsteinsäureanhydrid, Glutarsäureanhydrid, Äpfelsäureanhydrid, Phthalsäureanhydrid, dihalogenierte Phthalsäureanhydride, tetrahalogenierte Phthalsäureanhydride und Diels-Alder-Addukte von Maleinsäureanhydrid bzw. den diesen Anhydriden zugrundeliegenden Dicarbonsäuren oder deren Derivaten in Gegenwart von Polyetherolen mit einer Molmasse von 500 bis 6.000 g/Mol und einer Hydroxylfunktionalität von 2 bis 5 bei einer Temperatur von 140°C bis 250°C vor, wobei die Polyetherole vor, während oder nach der Abbaureaktion mit kohlenstoffungesättigten, carbonylgruppenhaltigen Monomeren einer radikalischen Pfropfungsreaktion unterzogen werden. Gemäß den beschriebenen Beispielen führt das Verfahren der DE 195 12 778 C1 zu isocyanatreaktiven Polyoldispersionen, die, obwohl sie bereits eine relativ niedrige Hydroxylzahl aufweisen, immer noch eine vergleichsweise hohe Säurezahl von immer über 5 mg KOH/g aufweisen. Eine Säurezahl von über ca. 2 mg KOH/g birgt jedoch die Gefahr der negativen Einwirkung auf die für die Polyurethan-Blockweichschaum-Wiederherstellung nötigen Blas- und Gelkatalysatoren, bis hin zur Blockierung derselben. Die in der DE 195 12 778 C1 beschriebenen Recyclatpolyole sind daher nachteilig.

DE102013106364A1 beschreibt ein Verfahren zur Herstellung eines Polyurethan-Blockschaumstoffes durch Acidolyse von Polyurethan-Abfall in einer Reaktion mit wenigstens einem Dicarbonsäureanhydrid und einem gepfropften Polyol. Um einen hochqualitatives und für die Herstellung von ursprünglichem PUR-Blockschaum geeignetes Recyclat-Polyol herzustellen, verwendet man dafür einen speziellen Duplex-Stahl.

Alle beschriebenen Verfahren haben den Nachteil, dass sie eine erhebliche Vorsortierung der Recyclingmaterialien benötigen, um ein für viele Einsatzzwecke brauchbares Polyol, bzw. eine Polyolmischung zu erhalten.

EP 0 682 063 A1 offenbart Verfahren zur Herstellung von für das Polyisocyanat-Polyadditionsverfahren geeigneten, Hydroxylgruppen aufweisenden Verbindungen aus Polyurethanpolyharnstoff- und/oder Polyharnstoffabfällen.

WO 2006/080743 A1 offenbart ein Verfahren zur Herstellung von Polyol durch Recycling von Polymerabfällen, umfassend:
(a) Depolymerisieren von Polyesterabfällen, die PET enthalten;
(b) Polykondensieren der depolymerisierten Produkte aus Schritt (a) mit mehrbasischer Säure und mehrwertigem Alkohol, um Polyesteroligomer zu erhalten;
(c) Umsetzen der Oligomerzusammensetzung aus Schritt (b) mit den Aminen, um eine Aminaddukt-Polyolzusammensetzung mit der Funktion eines Tensids zu erhalten. US 4,044,046 offenbart ein Verfahren zur Rückgewinnung von Polyol aus einem Polyurethan, umfassend das Auflösen des Polyurethans in einem aliphatischen Diol und Erhitzen des gelösten Polyurethans in Gegenwart eines halogenierten Esters der Phosphorsäure, um das zur Herstellung des Polyurethans verwendete Polyisocyanat in fester Form und das zur Herstellung des Polyurethans verwendete Polyol zusammen mit dem durch Reaktion mit dem aliphatischen Diol gebildeten Polyol mit Urethanbindung in flüssiger Form zurückzugewinnen.

EP 0 718 349 A1 offenbart ein Verfahren zur Herstellung von Recyclatpolyolen durch Umsetzung von Polyurethan-Hartschaum mit kurzkettigen, Hydroxylgruppen enthaltenden Verbindungen, dadurch gekennzeichnet, dass dem Reaktionsgemisch nach der Glykolyse bei einer Temperatur, die 10 bis 80°C unter der Glykolysetemperatur liegt, mindestens ein epoxidiertes natives fettes Öl zugesetzt wird.

Die Präsentation "Innovative approach to conversion of flexible PU foam residues into polyol on an industrial scale" (Kongress "Feiplar Composites & Feipur", 11, November 2014 in Sao Paulo, Brasilien) offenbart eine Recyclingtechnologie für flexible PU-Schaumabfälle.

Dementsprechend liegt der vorliegenden Erfindung die Aufgabe zugrunde, vielseitig anwendbares und leicht zugängliches Recyclingpolyol zur Verfügung zu stellen, leicht zugänglich heißt in diesem Zusammenhang insbesondere, dass es herstellbar ist, ohne dass die zu recyclierenden Materialien einer umfangreichen Vorsortierung unterzogen werden müssen.

Erfindungsgemäß wird diese Aufgabe gelöst durch eine Polyolmischung (polyolhaltige Dispersion) wie in Anspruch 1 definiert.

Die Aminzahl wird dabei nach DIN 53176, die Säurezahl nach DIN 53402, die Viskosität nach DIN 53019 und die Hydroxylzahl nach DIN 53240 bestimmt.

Das erfindungsgemäße Polyol ist zugänglich durch ein Verfahren zur Herstellung von Isocyanate-reaktiven Polyoldispersionen aus Polyurethan- Abfällen aus dem Post-Consumer Bereich in Gegenwart von Polyetherolen, dadurch gekennzeichnet, dass man in einem ersten Reaktionsschritt
a) die Polyurethanabfälle zunächst mit einem Reaktionsgemisch, enthaltend wenigstens eine Dicarbonsäure oder ein Dicarbonsäurederivat, insbesondere ein Dicarbonsäureanhydrid und
   wenigstens ein Polyetherol mit einer mittleren Molmasse von 400 bis 6000 g/mol und einer Hydroxylfunktionalität von 2 bis 4, und bevorzugt wenigstens einen zur Initiierung einer radikalischen Polymerisation geeigneten Radikalbildner bei Temperaturen von 170°C bis 210°C unter Bildung einer Dispersion umsetzt;
   und man in einem zweiten Reaktionsschritt
b) die unter a) erhaltene Dispersion noch mit wenigstens einem kurzkettigen Diol und/oder einem kurzkettigen Triol (also bevorzugt jeweils mit 2 bis 8 Kohlenstoffatomen, im Falle des Triols weiter bevorzugt mit 3 bis 8 Kohlenstoffatomen) bei Temperaturen bei 180°C bis 230°C zu einer isocyanatreaktiven Polyoldispersion umsetzt.

Dieses Verfahren ist beschrieben in der mit gleichem Zeitrang eingereichten deutschen Patentanmeldung mit dem Aktenzeichen DE 10 2016 122 275.5. Diese Anmeldung beschreibt Ausgestaltungen des Verfahrens zur Herstellung der erfindungsgemäßen Polyolmischungen.

Die erfindungsgemäße Polyolmischung zeichnet sich dadurch aus, dass sie aus einem Recyclingprozess ohne weitgehende Vorsortierung gewonnen wurde. Solche Recyclingprozesse waren bislang im Stand der Technik nicht bekannt oder führten zu unzureichenden Produkten. Die Tatsache, dass das Polyol aus wenig vorsortierten Recyclingmaterialien gewonnen wurde, lässt sich u.a. an bestimmten Füllstoffen erkennen, die (noch) in der Polyolmischung enthalten sind. Hierbei sind insbesondere Calciumcarbonat, SAN, PIPA und PHD im Sinne der Erfindung kennzeichnend.

Überraschenderweise hat sich herausgestellt, dass mittels des oben beschriebenen Recyclingverfahrens aus Polyurethanabfällen Recyclingpolyole gewonnen werden können, die über gute Produkteigenschaften verfügen und dass dafür eine viel geringere beziehungsweise keine Vorsortierung der Polyurethanabfälle notwendig ist, als bei den im Stand der Technik bekannten Verfahren. Dennoch ist eine mechanische Abtrennung der nicht-Polyurethanbestandteile aus dem Recyclingmaterial oft hilfreich.

Somit stellen die erfindungsgemäßen Polyolmischungen einen guten Grundstoff für neue Polyurethane dar, wobei sie bevorzugt mit Basispolyol, also Polyol, das nicht aus einem Recyclingprozess stammt, gemischt werden können. Aus den erfindungsgemäßen Polyolmischungen sind somit sowohl Hartschäume als auch Weichschäume herstellbar, je nachdem, wie die einzelnen Produkteigenschaften eingestellt sind, wobei in die Einstellung der Produkteigenschaften über breite Bereiche im Rahmen des Verfahrens, durch das das erfindungsgemäße Polyol zugänglich ist (siehe oben), eingestellt werden können.

So sind für eine spätere Anwendung zu Hartschäumen bevorzugt 160-500 mg KOH/g als Hydroxylzahl einzustellen, für Weichschäume bevorzugt 35-100 mg KOH/g.

Zur Herstellung von Prepolymeren, Adhäsiven und/oder Elastomeren ist eine Hydroxylzahl von 35-160 mg KOH/g bevorzugt einzustellen.

Die erfindungsgemäße Polyolmischung enthält außer Polyolen regelmäßig auch Unterbestandteile wie Oligo- und/oder Polyharnstoffe und Polyamide. Auch kurzkettige Harnstoffe und Amide sind möglich.

Die erfindungsgemäße Polyolmischung ist Isocyanat-reaktiv, sodass sie in den Polyurethanherstellungsprozess gut eingesetzt werden kann.

Die erfindungsgemäßen Recyclat (oder Recycling-) Polyole haben ein Hydroxyl-Äquivalent, bzw. eine Hydroxyl-Funktionalität, die im Bereich der Polyetherole liegt, die für viele Anwendungen nötig sind.

Das erfindungsgemäße Polyol ist ein verhältnismäßig hochwertiges Polyol, das erstmalig auf direktem Wege - wie oben beschrieben - aus verhältnismäßig unsortierten Polyurethan-Post-Consumer-Abfällen erhaltbar ist.

Als Ausgangsmaterial eignen sich dabei besonders alle Abfälle von Polyurethanen auf der Basis von weichen bis halbharten Polyurethanen aus dem Post-Consumer-Bereich. Diese können gegebenenfalls mit anderen Polymeren und/oder Füllstoffen vermischte Polyurethane sein, beispielweise auf Polyether- oder Polyesterbasis, sowie Polyharnstoffe und deren Copolymere. Die verfahrens- und anwendungstechnischen Gesichtspunkte der eingesetzten Polyurethane - beispielsweise ob füllstoff- und additivhaltig, massig oder geschäumt - sind dabei für das Verfahren zur Herstellung des erfindungsgemäßen Polyols beliebig. Aus verfahrenstechnischen Gründen ist es jedoch bevorzugt, die Polyurethanabfälle von Textilien, Stahl, Holz und weitere Fremdstoffe frei und in zerkleinerter Form einzusetzen. Der Zerkleinerungsgrad ist frei wählbar und beeinflusst lediglich die Geschwindigkeit der Abbaureaktion.

Weiche Polyurethane im Sinne der vorliegenden Erfindung sind solche, die über eine offene Zellenstruktur verfügen, eine Härte von 300 bis 500 N bei 40% Belastung gemessen nach SS-EN ISO 2439:2008(E) verfügen sowie eine Elastizität von 25 bis 60% (gemessen nach EN ISO 8307).

Halbharte Urethane sind Materialien mit einer offenen Zellstruktur, die aber über eine Druckfestigkeit von mindestens 100 kPa verfügen gemessen nach EN ISO 844:2009). Polyurethanhartschaummaterialien im Sinne der vorliegenden Erfindung sind solche Materialien, die im Bereich des Polyurethans über eine geschlossene Zellenstruktur und eine Druckfestigkeit von mindestens 100 kPa verfügen gemessen nach EN ISO 844:2009).

Auf Grund der guten Qualitäten des Recyclatpolyols, das aus dem erfindungsgemäßen Verfahren gewonnen werden kann, können verhältnismäßig hohe Anteile des erhaltenen Produktes in die Herstellung von hochwertigen Polyurethanmaterialien eingesetzt werden. Die genannten Verhältnisse sind dabei Gewichtsverhältnisse.

Bevorzugt ist eine erfindungsgemäße Polyolmischung, die dadurch gekennzeichnet ist, dass sie ≥ 5% Harnstoffe auf Basis von Methylendiphenylisocyanat (MDI) und ≥ 50% Harnstoffe auf Basis von Toluenediisocyanate (TDI) umfasst, bezogen auf die Gesamtzahl aller in der Mischung enthaltenen Harnstoffe.

Harnstoffe auf Basis von MDI, bzw. TDI sind solche, die aus den entsprechenden Grundstoffen entstanden sind.

Auch diese Harnstoffeverhältnisse weisen auf den Recyclingprozess hin, aus dem das erfindungsgemäße Polyol zugänglich gemacht worden ist.

Bevorzugt ist eine erfindungsgemäße Polyolmischung, die dadurch gekennzeichnet ist, dass die Mischung ≥ 5% Imide auf Basis von MDI und ≥ 50% Imide auf Basis von TDI umfasst, bezogen auf die Gesamtzahl aller in der Mischung enthaltenen Imide.

Für Imide auf Basis von MDI bzw. TDI gilt das oben Gesagte analog.

Ebenfalls erfindungsgemäß bevorzugt ist eine Polyolmischung, umfassend ≥ 6, weiter bevorzugt ≥ 8 verschiedene Pigmente.

Diese bevorzugte Polyolmischung ist besonders günstig herstellbar: Die Vielzahl der Pigmente ist beim derzeitigen Stand der Technik ein Hinweis auf die Herkunft aus dem oben beschriebenen Recycling-Verfahren. Damit ist sie besonders günstig herstellbar.

Pigmente im Sinne der vorliegenden Erfindung sind insbesondere Farbstoffe in Pigmentform.

Bevorzugt ist eine erfindungsgemäße Polyolmischung, wobei mindestens zwei oberflächenspannungswirksame Stoffe ausgewählt aus der Gruppe bestehend aus den silikonasierten oberflächenspannungwirksamen Stoffen, insbesondere Polysiloxanpolyoxyalkylenblockcopolymere.

Alternativ oder zusätzlich bevorzugt ist eine erfindungsgemäße Polyolmischung, wobei wenigstens zwei Amine ausgewählt aus der Gruppe bestehend aus Triethylenediamin, N,N-Dimethylethanolamin und anderen tertiären marktüblichen Amin-Katalysatoren für Polyurethanherstellung und/oder wenigstens zwei metallorganische Katalysatoren insbesondere Dibutylzinndilaurat, Zinnoctoat und/oder ein Amin und ein Metall, jeweils ausgewählt aus den vorgenannten Gruppen.

Bevorzugt handelt es sich bei den Aminen um Katalysatoren und/oder Katalysatorenreste.

Erfindungsgemäß bevorzugt ist auch eine Polyolmischung, umfassend Partikel einer Filtergängigkeitsobergrenze von 50 µ, bevorzugt 200 µ, ausgewählt aus der Gruppe bestehend aus Sand-, Holz-, Cellulosefaser- und Textilfaserpartikeln.

Bevorzugt ist die Filtergängigkeitsobergrenze 200 µ. Mit der bevorzugten Filtergängigkeitsobergrenze ist das Produkt noch leichter zugänglich, da durch ein höheres Filterausschlussvolumen die Filtriergeschwindigkeit erhöht werden kann.

Bevorzugt ist eine erfindungsgemäße Polyolmischung, umfassend wenigstens eine Verbindung ausgewählt aus der Gruppe bestehend aus Metalloxiden, halogenhaltigen Flammschutzmitteln, halogenfreien Flammschutzmitteln ohne Melamin, reaktiven Flammschutzmitteln und additiven Flammschutzmitteln oder deren Abbauprodukte.

Weiter bevorzugt, oder alternativ bevorzugt ist eine erfindungsgemäße Polyolmischung, die sich dadurch auszeichnet, dass die Polyole zu ≥ 90 Gew.-% eine Molmasse von 106 bis 300 000 g/mol besitzen und eine mittlere Molmasse von 400 - 6000 g/mol vorliegt.

Ebenfalls bevorzugt ist eine erfindungsgemäße Polyolmischung, wobei die Polyole in der Polyolmischung zu 30% bis 60% über ein Molekulargewicht von > 200 bis 700 g/mol verfügen.

Die erfindungsgemäße Polyolmischung ist ein Recyclingprodukt aus unsortiertem beziehungsweise wenig sortiertem Ausgangsmaterial. Dies führt dazu, dass sie hinsichtlich der in der Polyolmischung enthaltenen Polyole über eine von frisch hergestellten Polyolen regelmäßig abweichende Molmassenverteilung verfügt.

Bevorzugt umfasst die erfindungsgemäße Polyolmischung 1% bis 10% Polyole einer Molmasse von 75 bis 106 g/mol und/oder 1% bis 10% Polyole einer Molmasse von > 106 bis 200 g/mol und/oder 20% bis 50% einer Molmasse von > 700 bis 3000 g/mol und/oder wenigstens 5% einer Molmasse von > 3000 bis 6000 g/mol und/oder wenigstens 1% einer Molmasse von > 6000 bis 30 000 g/mol. Dabei sind die Angaben jeweils auf die Zahl der Moleküle (Zahlenmittel Mn) der Gesamtzahl der in der Mischung enthaltenen Polyole bezogen.

### Beispiel 1

In einem Edelstahl-Reaktor wurden 35 Gew.-% eines Polyethertriols (Dow Chemical Company, VORANOL CP 755) mit einer mittlere Molmasse von 700 g/mol zusammen mit 15 Gew.-% Phthalsäure, 5 Gew.-% Maleinsäure und einer Menge von 3 Gew.-% Wasserstoffperoxid (50 %ig) vorgelegt und innerhalb von 120 Minuten auf 170°C aufgeheizt.

Bei ab dieser Temperatur wurden 40 Gew.-% von aus Polyurethan-Post-Consumer-Matratzen (unsortiert, geschreddert auf ca. 2x2x2 cm Größe) Abfällen so zugegeben, dass die Temperatur zwischen 180°C bis 190°C gehalten wurde, bis die Polyurethan-Materialien dispergiert waren.

Danach wurde die Temperatur bis 210°C erhöht und zwei Stunden gerührt und danach unter Rühren 2 Gew.-% kurzkettiges Glykol (Diethylenglycol) so zugegeben, dass die Temperatur zwischen 205°C bis 220°C gehalten wurde.

Das Gemisch wurde eine weitere Stunde bei einer Temperatur von 210°C (220) gerührt und danach unter Rühren bis 80°C abgekühlt. Das Recyclatpolyol wurde danach abgepumpt, mit einem 250 µm selbstreinigendem Filter filtriert und bis Raumtemperatur abgekühlt.

So erhielt man ein Recyclatpolyol, bei dem die Säurezahl sicher unter 1,5 mg KOH/g liegt und der Gehalt von primären aromatischen Aminen lag immer unter 0,05 Gew.-%.

Das Produkt hatte folgendes Eigenschaftsbild: (Spezifikation)
Hydroxylzahl : 200 mg KOH/g, gemessen nach DIN 53240
Säurezahl : 1,0 mg KOH/g, gemessen nach DIN 53402
Viskosität : 2.400 m Pa·s bei 25°C, gemessen nach DIN 53019
Aminzahl: 8 mg KOH/g, gemessen nach DIN 53176
Nachweisbare Pigmente > 10

Das Recyclingpolyol (erfindungsgemäße Polyolmischung) enthielt sowohl Calciumcarbonat als auch SAN, PIPA und PHD. Es fiel aus hinsichtlich der weiteren Merkmale wie MDI/TDI Verhältnis für Harnstoffe und Amide, der Anzahl der vorhandenen Pigmente, der oberflächenspannungswirksamen Stoffe, der Amine, der Filtergängigkeit der enthaltenen Partikel, der mittleren Molmasse sowie der Molmassenverteilung in die oben beschriebenen bevorzugten Bereiche.

Dieses Recyclat-Polyol ist für die Herstellung von Polyurethan-Hartschaum geeignet.

### Beispiel 2

In einem Edelstahl-Reaktor wurden 35 Gew.-% eines langkettigen Polyethertriols (Lupranol^{®} 3300, BASF) mit einer mittlere Molmasse 420 g/mol zusammen mit 14 Gew.-% Phthalsäure, 1 Gew.-% Maleinsäure, 1 Gew.-% Acrylsäure und einer Menge von 3 Gew.-% tert.-Butyl-hydroperoxid (PEROXAN BHP-70 - PERGAN GmbH) vorgelegt und innerhalb von 120 Minuten auf 180°C aufgeheizt.

Bei dieser Temperatur wurden 40 Gew.-% von Polyurethan-Post-Consumer-Matratzen (unsortiert, geschreddert auf ca. 2x2x2cm Größe) Abfällen so zugegeben, dass die Temperatur zwischen 180°C bis 190°C gehalten wurde, bis die Polyurethanmaterialien dispergiert waren.

Danach wurde zwei Stunden gerührt und im Anschluss daran 6 Gew.-% kurzkettiges Glykol (Diethylenglycol) so zugegeben, dass die Temperatur zwischen 205°C bis 210°C (220) gehalten wurde.

Das Gemisch wurde eine weitere Stunde bei einer Temperatur von 210°C (220) gerührt , anschließend 2 Gew.% Dipropylenglykol zugegeben und weitere 30 min bei 220°C gehalten und danach unter Rühren bis 80°C abgekühlt. Das Recyclatpolyol wurde danach abgepumpt, wie in Beispiel 1 gefiltert und bis Raumtemperatur abgekühlt.

Das Produkt hat folgendes Eigenschaftsbild:
Hydroxylzahl : 265 mg KOH/g
Säurezahl : 0,5 mg KOH/g
Viskosität : 4.500 m Pa·s bei 25°C,
Aminzahl: 16 mg KOH/g, jeweils gemessen wie in Beispiel 1.
Nachweisbare Pigmente > 10

Das Recyclingpolyol (erfindungsgemäße Polyolmischung) enthielt sowohl Calciumcarbonat als auch SAN, PIPA und PHD. Es fiel aus hinsichtlich der weiteren Merkmale wie MDI/TDI Verhältnis für Harnstoffe und Amide, der Anzahl der vorhandenen Pigmente, der oberflächenspannungswirksamen Stoffe, der Amine, der Filtergängigkeit der enthaltenen Partikel, der mittleren Molmasse sowie der Molmassenverteilung in die oben beschriebenen bevorzugten Bereiche.

Durch die Verwendung von einem kurzkettigen Glykol (Dipropylenglykol) wurde die Säurezahl weiter nach unten reduziert. So wird ein negativer Einfluss auf die Katalyse bei der nachfolgenden Herstellung von Polyurethan-Hartschaum vermieden.

Mittels des beschriebenen Verfahrens gelingt es erstmalig, auf direktem Wege die Eigenschaften von Recyclatpolyolen den Polyolen anzupassen, die für die Herstellung der ursprünglichen bzw. hier in der Wiederaufbereitung eingesetzten Polyurethane verwendet wurden. Insbesondere bei weichen Polyurethanen war dies mit den bisher bekannten Verfahren nicht möglich.

### Beispiel 3

Es wurden mehrmals Schaumversuche zur Herstellung von Polyurethan-Hartschaum-Paneelen unter Verwendung von erfindungsgemäßen Recyclat-Polyol (Polyolmischung) durchgeführt. Bei diesen Schaumversuchen wurden Polyole im Gew.-Verhältnis Hartschaum-Basispolyol/Recyclatpolyol (Beispiel 1 oder 2) von 90/10 bis 60/40 eingesetzt. Es wurden übliche Rezepturen für die Herstellung von Polyurethan-Hartschaum-Paneele verwendet und 7 Industrieverschäumungstests mit einem Raumgewicht von 28 kg/m³ bis 60 kg/m³ durchgeführt.

Es konnten PUR-Hartschaum-Paneele hergestellt werden, ohne dass dabei die Eigenschaften der aus Basispolyol/erfindungsgemäßes Recyclatpolyol hergestellten PUR-Produkte gegenüber entsprechenden originalen PUR-Produkten, also gegenüber PUR-Produkten ohne Zusatz von Recyclatpolyol, relevant nachteilig verändert wurden. Die Eigenschaften der Paneele wie Druckfestigkeit, Dimension-Stabilität und Wärmeleitfähigkeit der Produkte war somit vergleichbar bzw. gleichwertig.

## Patentansprüche

1. Polyolmischung mit folgenden Produkteigenschaften:
- Hydroxylzahl: 35 bis 650 mgKOH/g bestimmt nach DIN 53240,
- Aminzahl: 1 bis 40 mgKOH/g bestimmt nach DIN 53176,
- Säurezahl: 0,1 bis 20 mgKOH/g bestimmt nach DIN 53402,
- Viskosität: 800 bis 50 000 mPa*s bestimmt nach DIN 53019,
**dadurch gekennzeichnet, dass** die Polyolmischung wenigstens zwei der Verbindungen umfasst, ausgewählt aus der Gruppe bestehend aus Kalziumcarbonat, Styrol-Acrylnitril-Copolymere (SAN), Polyisocyanatpolyadditionpolyole (PIPA), Polyharnstoffdispersionspolyol (PHD) und Melamin, und
≥ 5 verschiedene Pigmente umfasst,
hergestellt durch ein Verfahren, wobei
man in einem ersten Reaktionsschritt
a) die Polyurethanabfälle zunächst mit einem Reaktionsgemisch, enthaltend wenigstens eine Dicarbonsäure oder ein Dicarbonsäureanhydrid, und wenigstens ein Polyetherol mit einer mittleren Molmasse von 400 bis 6000 g/mol und einer Hydroxyl-funktionalität von 2 bis 4, und wenigstens einen zur Initiierung einer radikalischen Polymerisation geeigneten Radikalbildner bei Temperaturen von 170°C bis 210°C unter Bildung einer Dispersion umsetzt;
und man in einem zweiten Reaktionsschritt
b) die unter a) erhaltene Dispersion noch mit wenigstens einem Diol mit 2 bis 8 Kohlenstoffatomen und/oder einem Triol mit 3 bis 8 Kohlenstoffatomen bei Temperaturen bei 180°C bis 230°C zu einer isocyanatreaktiven Polyoldispersion umsetzt.

2. Polyolmischung nach Anspruch 1, **dadurch gekennzeichnet, dass** sie ≥ 5% Harnstoffe auf Basis von Methylendiphenylisocyanat (MDI) und ≥ 50% Harnstoffe auf Basis von Toluenediisocyanate (TDI) umfasst, bezogen auf die Gesamtzahl aller in der Mischung enthaltenen Harnstoffe.

3. Polyolmischung nach einem der Ansprüche 1 oder 2, **dadurch gekennzeichnet, dass** die Mischung ≥ 5% Imide auf Basis von MDI und ≥ 50% Imide auf Basis von TDI umfasst, bezogen auf die Gesamtzahl aller in der Mischung enthaltenen Imide.

4. Polyolmischung nach einem der vorangehenden Ansprüche, umfassend wenigstens zwei oberflächenspannungswirksame Stoffe ausgewählt aus der Gruppe bestehend aus silikonbasierten oberflächenspannungwirksamen Stoffen, insbesondere Polysiloxanpolyoxyalkylenblockcopolymere.

5. Polyolmischung nach einem der vorangehenden Ansprüche, umfassend wenigstens zwei Amine ausgewählt aus der Gruppe bestehend aus Triethylenediamin, N,N-Dimethylethanolamin und anderen tertiären marktüblichen Amin-Katalysatoren für Polyurethanherstellung und/oder wenigstens zwei metallorganische Katalysatoren insbesondere Dibutylzinndilaurat, Zinnoctoat und/oder ein Amin und ein Metall, jeweils ausgewählt aus den vorgenannten Gruppen.

6. Polyolmischung nach einem der vorangehenden Ansprüche, umfassend Partikel einer Filtergängigkeitsobergrenze von 50µ ausgewählt aus der Gruppe bestehend aus Sand-, Holz-, Zellulosefaser- und Textilfaserpartikel.

7. Polyolmischung nach einem der vorangehenden Ansprüche, umfassend wenigstens eine Verbindung ausgewählt aus der Gruppe bestehend aus Metalloxiden, halogenhaltigen Flammschutzmitteln, halogenfreien Flammschutzmitteln ohne Melamin, reaktiven Flammschutzmitteln und additiven Flammschutzmitteln oder deren Abbauprodukte.

8. Polyolmischung nach einem der vorangehenden Ansprüche, **dadurch gekennzeichnet, dass** die Polyole zu ≥ 90 Gew.-% eine Molmasse von 106 bis 300 000 g/mol besitzen und eine mittlere Molmasse von 400 - 6000 g/mol vorliegt.

9. Polyolmischung nach einem der vorangehenden Ansprüche, wobei die Polyole in der Polyolmischung zu 30% bis 60% über ein Molekulargewicht von > 200 bis 700 g/mol verfügen.

## Claims

1. Polyol mixture having the following product properties:
- hydroxyl value: 35 to 650 mg KOH/g determined to DIN 53240,
- amine value: 1 to 40 mg KOH/g determined to DIN 53176,
- acid value: 0.1 to 20 mg KOH/g determined to DIN 53402,
- viscosity: 800 to 50 000 mPa*s determined to DIN 53019, **characterized in that** the polyol mixture comprises at least two of the compounds selected from the group consisting of calcium carbonate, styrene-acrylonitrile copolymers (SAN), polyisocyanate polyaddition polyols (PIPA), polyurea dispersion polyol (PHD) and melamine, and
comprises ≥ 5 different pigments,
produced by a process wherein
in a first reaction step
a) the polyurethane wastes are first reacted with a reaction mixture comprising at least a dicarboxylic acid or a dicarboxylic anhydride and at least one polyetherol having an average molar mass of 400 to 6000 g/mol and a hydroxyl functionality of 2 to 4, and at least one free-radical former capable of initiating a free-radical polymerization at temperatures of 170°C to 210°C to form a dispersion;
and in a second reaction step
b) the dispersion obtained in a) is also reacted with at least one diol having 2 to 8 carbon atoms and/or a triol having 3 to 8 carbon atoms at temperatures of 180°C to 230°C to give an isocyanate-reactive polyol dispersion.

2. Polyol mixture according to Claim 1, **characterized in that** it comprises ≥ 5% ureas based on methylene diphenyl isocyanate (MDI) and ≥ 50% ureas based on toluene diisocyanate (TDI), based on the total number of all ureas present in the mixture.

3. Polyol mixture according to either of Claims 1 and 2, **characterized in that** the mixture comprises ≥ 5% imides based on MDI and ≥ 50% imides based on TDI, based on the total number of all imides present in the mixture.

4. Polyol mixture according to any of the preceding claims, comprising at least two surface tension-active substances selected from the group consisting of silicone-based surface tension-active substances, especially polysiloxane-polyoxyalkylene block copolymers.

5. Polyol mixture according to any of the preceding claims, comprising at least two amines selected from the group consisting of triethylenediamine, N,N-dimethylethanolamine and other tertiary commercially available amine catalysts for polyurethane production and/or at least two organometallic catalysts, especially dibutyltin dilaurate, tin octoate and/or an amine and a metal, each selected from the aforementioned groups.

6. Polyol mixture according to any of the preceding claims, comprising particles having an upper filter permeability limit of 50 µ, selected from the group consisting of sand particles, wood particles, cellulose fibre particles and textile fibre particles.

7. Polyol mixture according to any of the preceding claims, comprising at least one compound selected from the group consisting of metal oxides, halogen-containing flame retardants, halogen-free flame retardants without melamine, reactive flame retardants and additive flame retardants or degradation products thereof.

8. Polyol mixture according to any of the preceding claims, **characterized in that** the polyols have a molar mass of 106 to 300 000 g/mol to an extent of ≥ 90% by weight and an average molar mass is 400-6000 g/mol.

9. Polyol mixture according to any of the preceding claims, wherein 30% to 60% of the polyols in the polyol mixture have a molecular weight of > 200 to 700 g/mol.

## Revendications

1. Mélange de polyols présentant les propriétés de produit suivantes :
- indice d'hydroxyle : 35 à 650 mg de KOH/g, déterminé selon la norme DIN 53240,
- indice d'amine : 1 à 40 mg de KOH/g, déterminé selon la norme DIN 53176,
- indice d'acide : 0,1 à 20 mg de KOH/g, déterminé selon la norme DIN 53402,
- viscosité : 800 à 50 000 mPa*s, déterminée selon la norme DIN 53019,
**caractérisé en ce que** le mélange de polyols comprend au moins deux des composés choisis dans le groupe constitué par le carbonate de calcium, les copolymères de styrène-acrylonitrile (SAN), les polyols de polyaddition de polyisocyanate (PIPA), les polyols de dispersion de polyurée (PHD) et la mélamine et
≥ 5 pigments différents,
préparé par un procédé, dans lequel
dans une première étape de réaction,
a) on transforme les déchets de polyuréthane, d'abord avec un mélange réactionnel contenant au moins un acide dicarboxylique ou un anhydride d'acide dicarboxylique et au moins un polyétherol présentant une masse molaire moyenne de 400 à 6000 g/mole et une fonctionnalité hydroxyle de 2 à 4 et au moins un agent de formation de radicaux approprié pour initier une polymérisation radicalaire à des températures de 170 °C à 210 °C avec formation d'une dispersion ;
et, dans une deuxième étape de réaction,
b) on transforme encore la dispersion obtenue au point a) avec au moins un diol comprenant 2 à 8 atomes de carbone et/ou un triol comprenant 3 à 8 atomes de carbone à des températures de 180 °C à 230 °C en une dispersion de polyols réactifs vis-à-vis d'isocyanate.

2. Mélange de polyols selon la revendication 1, **caractérisé en ce qu'**il comprend ≥ 5 % d'urées à base d'isocyanate de méthylènediphényle (MDI) et ≥ 50 % d'urées à base de diisocyanates de toluène (TDI), par rapport au nombre total de toutes les urées contenues dans le mélange.

3. Mélange de polyols selon l'une des revendications 1 ou 2, **caractérisé en ce que** le mélange comprend ≥ 5 % d'imides à base de MDI et ≥ 50 % d'imides à base de TDI, par rapport au nombre total de tous les imides contenus dans le mélange.

4. Mélange de polyols selon l'une des revendications précédentes, comprenant au moins deux substances actives de manière tensioactive choisies dans le groupe constitué par les substances actives de manière tensioactive à base de silicone, en particulier les copolymères séquences de polysiloxane-polyoxyalkylène.

5. Mélange de polyols selon l'une des revendications précédentes, comprenant au moins deux amines choisies dans le groupe constitué par la triéthylènediamine, la N,N-diméthyléthanolamine et d'autres catalyseurs d'amine tertiaire usuels du commerce pour la préparation des polyuréthanes et/ou au moins deux catalyseurs organométalliques, en particulier le dilaurate de dibutylétain, l'octoate d'étain et/ou une amine et un métal, à chaque fois choisi dans les groupes précités.

6. Mélange de polyols selon l'une des revendications précédentes, comprenant des particules présentant une limite supérieure de capacité de rétention d'un filtre de 50 p choisies dans le groupe constitué par les particules de sable de bois, de fibre de cellulose et de fibre de textile.

7. Mélange de polyols selon l'une des revendications précédentes, comprenant au moins un composé choisi dans le groupe constitué par les oxydes métalliques, les agents ignifuges contenant halogène, les agents ignifuges exempts d'halogène sans mélamine, les agents ignifuges réactifs et les agents ignifuges additifs ou leurs produits de dégradation.

8. Mélange de polyols selon l'une des revendications précédentes, **caractérisé en ce que** les polyols présentent, à raison de ≥ 90 % en poids, une masse molaire de 106 à 300 000 g/mole et une masse molaire moyenne de 400 - 6000 g/mole.

9. Mélange de polyols selon l'une des revendications précédentes, les polyols dans le mélange de polyols disposant, à raison de 30 % à 60 %, d'un poids moléculaire de > 200 à 700 g/mole.
